(19) Europäisches Patentamt
European Patent Office
Office européen des brevets

(11) **EP 4 752 850 A1**

(12) **EUROPEAN PATENT APPLICATION**

(43) Date of publication:
03.06.2026 Bulletin 2026/23

(21) Application number: 25218948.5

(22) Date of filing: 27.11.2025

(51) International Patent Classification (IPC):
*G06V 10/776* (2022.01)    *G06V 20/56* (2022.01)

(52) Cooperative Patent Classification (CPC):
G06V 10/776; G06V 20/56

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.11.2024 US 202418962059

(71) Applicant: Robert Bosch GmbH
70442 Stuttgart (DE)

(72) Inventors:
• LI, Xin
Sunnyvale, CA 94085 (US)

• SU, Sanbao
Vernon, CT 06066 (US)
• DOAN, Thang
San Francisco, CA 94131 (US)
• BEHPOUR, Sima
Sunnyvale, CA 94085 (US)
• HE, Wenbin
Santa Clara, CA 95050 (US)
• GUO, Liang
San Jose, CA 95124 (US)
• REN, Liu
Saratoga, CA 95070 (US)

(74) Representative: Isarpatent
Patent- und Rechtsanwälte PartG mbB
Friedrichstraße 31
80801 München (DE)

(54) **SYSTEM AND METHOD FOR A VISION TRANSFORMER BASED ACTIVE TESTING FOR LABEL-EFFICIENT EVALUATION OF VISION TASKS**

(57) A method includes splitting an input image into a plurality of patches with each patch corresponding to a distinct region of the input image using a vision transformer. The input image is defined using a model output of a vision model. The method further includes defining a plurality of position embeddings including a position embedding for each of the plurality of patches and for the input image as a whole using the vision transformer, labeling identified regions of the original image based on the estimated loss map to define a labeled image; and outputting a test performance qualifier indicating expected performance of the vision model when the vision model is part of the vision system. The test performance qualifier is calculated using a weighted analysis based on the image loss level and the regional loss level for each patch provided with the labeled image.

**FIG. 1**

EP 4 752 850 A1

**Description**

TECHNICAL FIELD

Aspects of the present disclosure are generally directed to systems and methods for active testing for label-efficient evaluation of a vision model.

BACKGROUND

Computer vision systems acquire and analyze digital images to understand visual content captured in the digital images. The computer vision system can perform various processes to output specific measurements, extract specific features in the visual content, and/or provide a decision operation (e.g., pass-fail decision when inspecting objects for defect; identifying an object; and/or flagging a type of object in the visual content). In a non-limiting example, a computer vision system is configured to detect, classify, and/or identify objects in the visual content, and can be employed in various applications, such as, but not limited to, surveillance systems, autonomous vehicles, and manufacturing processes. In another example, the computer vision system is configured to perform a specific operation, such as, but not limited to, image segmentation to partition pixels of the digital image into discrete groups.

Machine learning techniques have played a significant role in developing the computer vision systems by, for example, training models using extensive annotated datasets. However, accurate and detailed annotated datasets can be slow and expense to generate. To improve efficiency and reduce costs, computer vision system can be developed using active testing in label-efficient model evaluation, where the objective is to estimate the performance of a vision model on the entire unlabeled test dataset with a limited annotation budget.

Active testing focuses on precise estimation of loss value, providing a more accurate understanding of the loss distribution for all instances. In some implementations, one of the goals of active testing is to select a subset of a large unlabeled test dataset using an acquisition function, the selected dataset is then labeled and used to make an accurate estimation of a vision model's performance across the entire dataset. For example, an active surrogate estimator (ASE) employs a weighted epistemic uncertainty score, estimated by ensemble models, to efficiently pinpoint informative instances. A key feature of ASE is the iterative updating of ensemble models with newly acquired labels, which helps reduce overconfidence and enhances the prediction for unseen test data.

SUMMARY

In one form, the present disclosure is directed to a method for active testing a vision model to be employed as part of a vision system to identify visual content of an original image. The method includes splitting an input image into a plurality of patches with each patch corresponding to a distinct region of the input image using a vision transformer, where the input image is defined using a model output of the vision model. The method further includes defining a plurality of position embeddings including a position embedding for each of the plurality of patches and for the input image as a whole using the vision transformer, and providing an estimated loss map for the original image based on an image loss level and a regional loss level for each patch, where the image loss level and the regional loss level for each patch are estimated using the plurality of position embeddings and a transformer encoder-multilayer perceptron of the vision transformer. The method further includes labeling one or more identified regions of the original image based on the estimated loss map to define a labeled image, and outputting a test performance qualifier indicating expected performance of the vision model when the vision model is part of the vision system. The test performance qualifier is calculated using a weighted analysis based on the image loss level and the regional loss level for each patch provided with the labeled image.

In one form, the present disclosure is directed to a system for active testing a vision model to be employed as part of a vision system to identify visual content of an original image. The system includes one or more hardware computing devices configured to split an input image into a plurality of patches with each patch corresponding to a distinct region of the input image using a vision transformer, where the input image is defined using the model output. The one or more hardware computing devices are also configured to define a plurality of position embeddings including a position embedding for each of the plurality of patches and for the input image as a whole using the vision transformer, and provide an estimated loss map for the original image based on an image loss level and a regional loss level for each patch, where the image loss level and the regional loss level for each patch are estimated using the plurality of position embeddings and a transformer encoder-multilayer perceptron of the vision transformer. The one or more hardware computing devices are also configured to provide one or more identified regions of the original image labeled based on the estimated loss map to define a labeled image, and output a test performance qualifier indicating expected performance of the vision model when the vision model is part of the vision system. The test performance qualifier is calculated using a weighted analysis based on the image loss level and the regional loss level for each patch provided with the labeled image.

BRIEF DESCRIPTION OF THE DRAWINGS

FIG. 1 is an illustrative example of vehicle employing an object classification model tested using an active vision model evaluation (AVME) system;

FIG. 2 is a block diagram of the AVME system;

FIG. 3 is a block diagram of a vision model under testing (VMUT) and a vision model assessment (VMA) module of the AVME system of FIG. 2;

FIG. 4 is a block diagram of the AVME system with the VMUT being a segmentation model;

FIG. 5 is a block diagram of the AVME system with the VMUT being an object detection model;

FIG. 6A is a block diagram of a vision meta model for the VMA module with the VMUT being the segmentation model;

FIG. 6B is a block diagram of the vision meta model for the VMA module with the VMUT being the object detection model; and

FIG. 7 is a flowchart of an example active vision model evaluation routine.

DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

While active surrogate estimators (ASEs) and other active testing methods, such as active testing surrogate (AST), evaluate image classification models, their effectiveness may be limited in dense recognition tasks, such as segmentation and object detection, due to inherent challenges in both instance and/or label acquisition stages.

For example, regarding instance acquisition, deep ensemble models are often impractical due to high computational costs and the challenge of achieving sufficient diversity within the ensemble models for dense recognition tasks. Additionally, updating these models with few newly labeled instances per iteration may provide insufficient information for retraining. Furthermore, from a label acquisition perspective, iterative processes increase the communication overhead between researchers and annotators. Moreover, previous approaches that involve labeling entire images are inefficient for tasks where only specific regions, such as borders and areas of ambiguity, carry the majority of the test error.

In one form, the present disclosure provides a system and/or method for an active vision model evaluation (AVME) system having label-efficient evaluation to identify highly informative images or regions by estimating the loss over the unlabeled test dataset in a single pass. The AVME may be configured to include a vision meta model having a vision transformer to address long-range dependencies for linking small, critical regions like object boundaries that can lead to errors in dense recognition tasks. In one form, the AVME system of the present disclosure is configured to a split an input image into a plurality of patches with each patch corresponding to a distinct region of the input image, where the input image is defined using the vision model under testing (VMUT). The AVME system may be further configured to define a plurality of position embeddings including a position embedding for each patch and for the input image as a whole, and to estimate an image loss level and a regional loss level for each patch using the plurality of position embeddings and a transformer encoder. The AVME system identifies high-loss regions in the input image to be labeled and outputs a performance qualifier of the vision model under testing using a weighted analysis based on the image loss level and the regional loss level for each patch. Among other characteristics, the AVME system having the meta model may identify highly informative images or regions by estimating the loss over the unlabeled test dataset in a single pass.

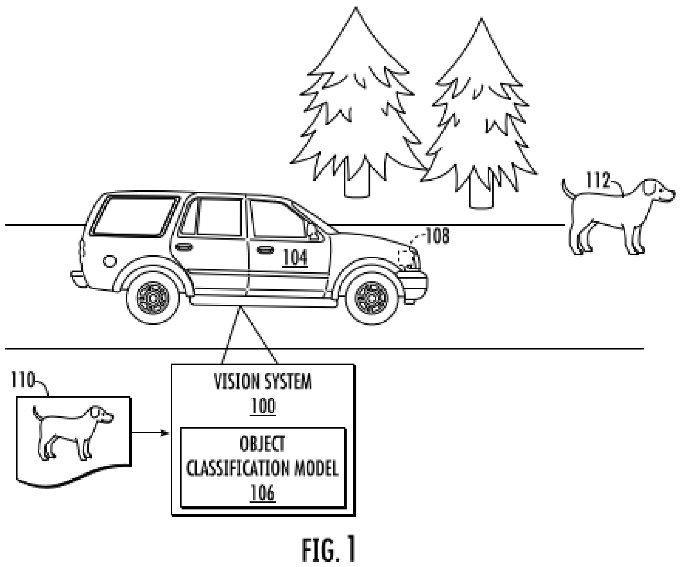

Referring to FIG. 1, in an example application, a vision system 100 of a vehicle 104 includes an object classification model 106, where the vision system 100 is at least partially tested using an AVME system of the present disclosure. The vehicle 104 includes one or more cameras 108 arranged about the vehicle 104 to capture one or more images 110 of a surrounding area of the vehicle 104. The images 110 may include pixel data captured by the cameras 108. For example, the cameras 108 may be 2D sensors configured to capture image pixels at various resolutions (e.g., standard definition (SD), high definition (HD), full-HD, ultra-high definition (UHD), 4K, etc.), dynamic range (8 bits, 10 bits, or 12 bits per pixel per color, etc.), and frequencies and count of color channels (e.g., infrared, red-green-blue (RGB), black & white, etc.). The cameras 108 may also include 3D sensors such as LiDAR sensors. The LiDAR sensors may be configured to generate a point cloud of individual distance points. These points are detected the LiDAR scanner transmitting brief pulses of light, which are reflected off various objects back to the LiDAR sensor. The travel times of these returning pulses are used to calculate the distance between the LiDAR sensor and the object. Regardless of format, the images 110 are processed by the vision system 100 to, at least, detect and, is applicable, identify objects in the image 110 (e.g., dog 112), using the object classification model 106.

In one form, by detecting and identifying the object, the vehicle 104 may perform certain operations to monitor position of the object relative to the vehicle 104 and/or take certain actions such as stopping the vehicle 104 or warning a passenger of the object using one or more human machine interfaces in the vehicle 104. For example, if the object classifier identifies the dog 112 in the image 110, the vehicle 104 may monitor the position of the dog 112 relative to the vehicle 104 recognizing the dog 112 may move toward the vehicle 104.

While a specific implementation is provided, the AVME system of the present disclosure is configured to test other types of vision systems and should not be limited to the example provided herein. In a non-limiting example, the vision system may include a segmentation feature for monitoring autonomous vehicles and/or in a security system as part of a biometric detection employed to identify an individual. Another specific implementation includes having the vision system as a control system to determine or ascertain an actuation signal based on a decision made. In a non-limiting example, the vision system is configured to determine whether a manufactured component has a defect and outputs an actuation signal to have the manufactured component travel in a designated direction of a conveyor system based on whether the component is defective or nominal. In yet another example, as part of a security system, the vision system is configured to determine whether a product was taken from an establishment (e.g., a painting being taken from a museum), and outputs an actuation signal to have one or more security protocols activated (e.g., alarms being emitted using speaker, notification to security guards, and/or locking down an area). The actuation signal may be supplied or transmitted to a controlled system. The controlled system may be activated and/or controlled using the actuation signal.

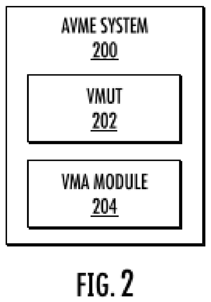

Referring to FIG. 2, an AVME system 200 includes a vision model under testing (VMUT) 202 and a vision model assessment (VMA) module 204. The VMUT is a vision model to be employed as part of a vision system to identify visual content of an original image. In a non-limiting example, the VMUT 202 is a segmentation model and/or an object detection model. The vision model (f) maps inputs ($x \in X$) to corresponding labels ($y \in Y$; $f : X \rightarrow Y$). With no assumption about the VMUT 202, the VMA module 204 is configured to use the predicted output of the VMUT 202 to estimate an expected loss of the predicted output as a performance qualifier (PQ).

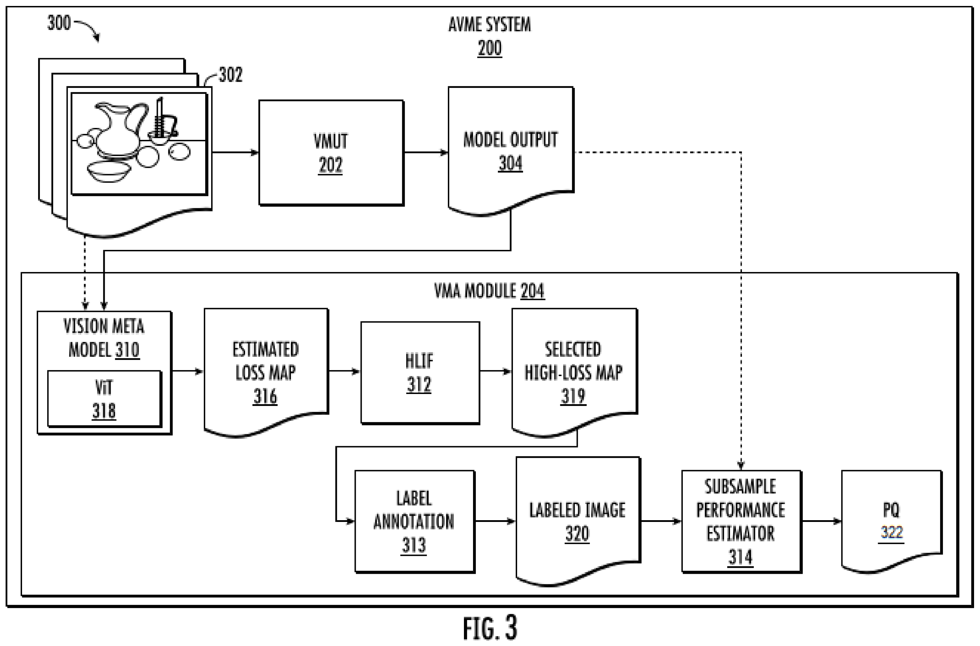

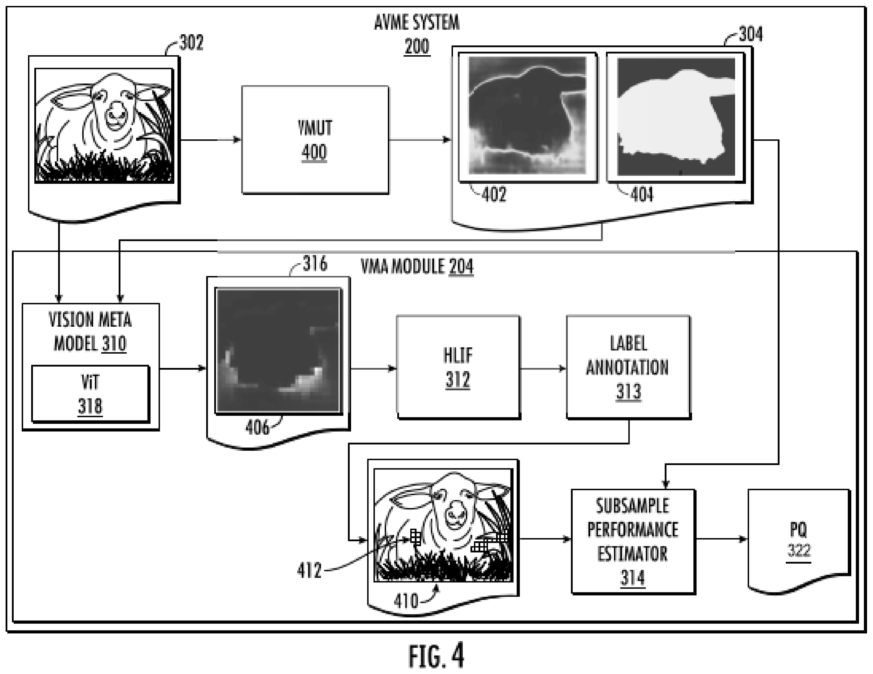

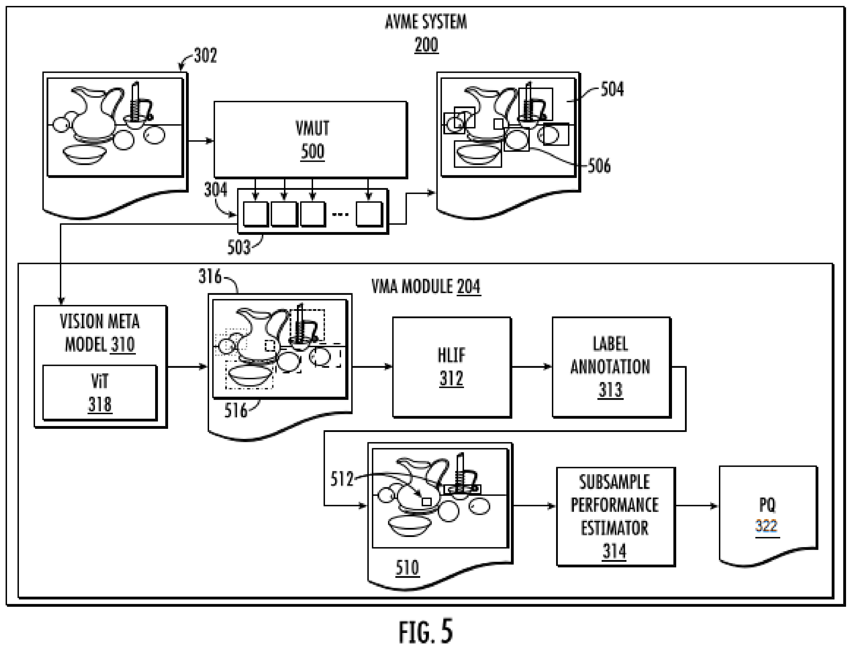

In one form, referring to FIG. 3, a test dataset 300 includes a plurality of testing images 302, provided as original images, that are not labeled. The test dataset 300 is provided to the VMUT 202 for processing to generate a model output 304. For example, referring to FIG. 4 a VMUT 400 is provided as a segmentation model, and the model output 304 includes a segmented image 402 and an entropy image 404. In another example, referring to FIG. 5, a VMUT 500 is provided as an object detection model. The model output 304 of the object detection model includes object queries 503 that provides features extracted from the image 302 and used for generating an object identifier image 504 with boundary boxes 506 highlighting detected objects, and/or data providing classifications of detected objects.

With continuing reference to FIG. 3, in one form, the VMA module 204 is configured to include a vision meta model 310, a high-loss image filter (HLIF) 312, a label annotation process 313, and a subsample performance estimator 314.

The vision meta model 310 is configured to reduce the high variance associated with limited labels in active testing and predict losses for the dataset 300. The vision meta model 310 processes an input image that is defined using the model output 304, and in some applications, the testing image 302 (e.g., original image) to define an estimated loss map 316 of the input image.

In a non-limiting example, in FIG. 4, with the VMUT 400 being the segmentation model, the input image to the vision meta model 310 includes the testing image 302 and the model output 304 having the segmented image 402 and the entropy image 404. In one form, the testing image 302, the segmented image 402 (e.g., class predictive distribution image), and the entropy image 404 are linked or concatenated together to form the input image.

In another example, in FIG. 5, with the VMUT 500 being the object detection model, the input image includes the object queries 503. Generally, for the segmentation model, a prediction is provided for every pixel, so the entire image is generally provided as part of the input image. For the object detection model, a prediction is provided for specific regions, so the full image may not be needed as part of the input.

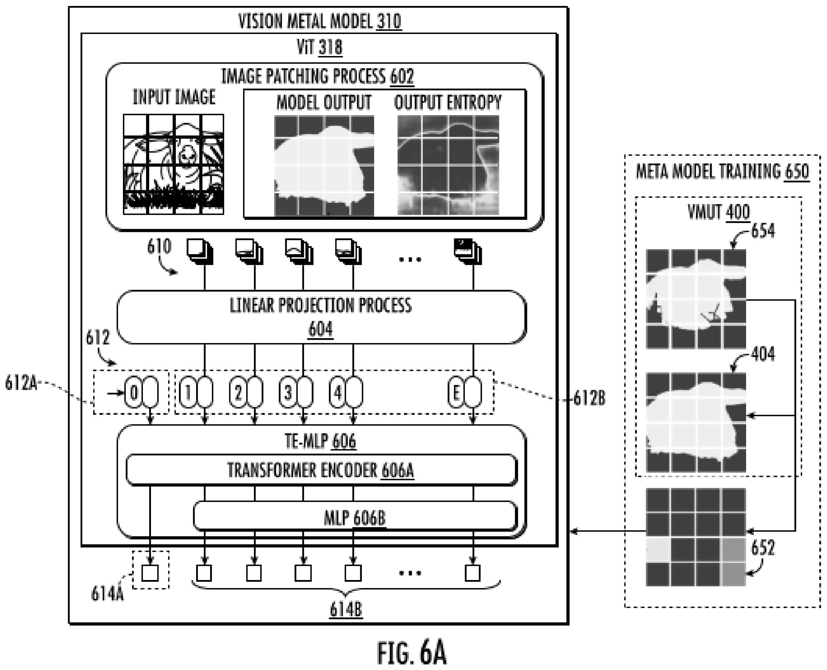

Referring to FIG. 3, in one form, the vision meta model 310 is configured to include a vision transformer (ViT) 318. The ViT 318 processes long-range dependencies in images by relating such regions to a broader image context. In a non-limiting example, referring to FIG. 6A, the ViT 318 includes an image patching process 602, a linear projection process 604, and a transformer encoder. Multilayer perceptron (TE-MLP) 606 has a transformer encoder 606A and a multilayer perceptron 606B after the encoder 606A.

In a non-limiting example, with the VMUT 400 being the segmentation model (e.g., FIG. 4), the image patching process 602 is configured to split/parcel the input image into a plurality of patches 610 with each patch corresponding to a distinct region of the input image.

The linear projection process 604 is configured to define a plurality of position embeddings 612 including a position embedding for the input image as a whole (e.g., image position embedding 612A) and position embeddings for each patch 610 (e.g., patch position embedding 612B). In a non-limiting example, the linear projection process 604 performs a linear projection to map the patches 610 to tokens of D dimensions, and then adds the position embeddings to the patch tokens, which are provided as inputs for the transformer encoder 606A. The image position embedding 612A is provided as a class embedding at position zero and the patch position embeddings 612B for the plurality of patches 610 are at positions one to E, where E is equal to the number of patches (e.g., 16 patches).

The TE-MLP 606 is configured to estimate an image loss level 614A and a regional loss level 614B for each patch using the plurality of position embeddings 612. Labeling the entire test image 302 may not be necessary and can be resource intensive, especially for segmentation and object detection models. To facilitate region level selection and annotation, the MLP 606B estimates the regional loss level 614B for each patch of the input image. The image loss level 614A and the regional loss levels 614B are employed to determine which regions of the testing image 302 is to be labeled.

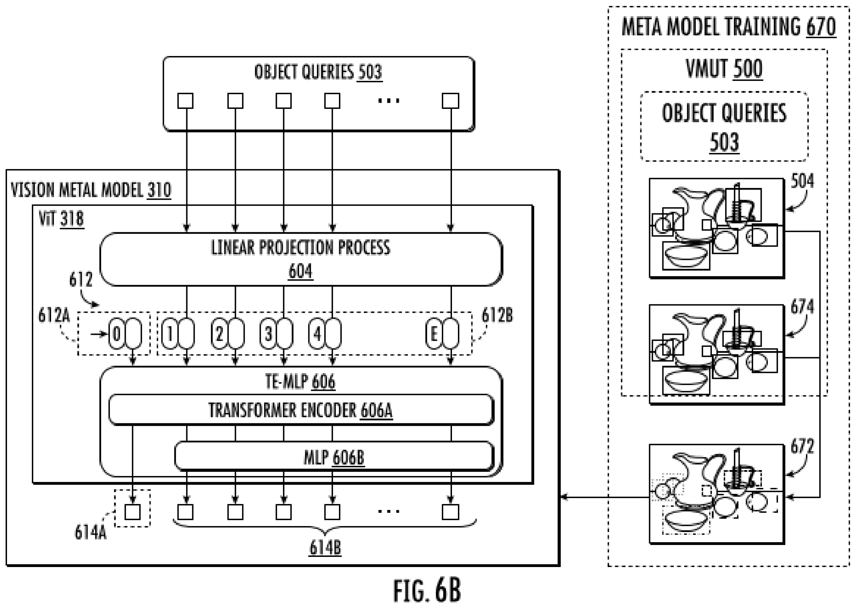

The ViT 318 processes the input image of the object detection model (e.g., VMUT 500) in a similar manner as that of the segmentation model (e.g., VMUT 400) to generate the estimated loss map 316. In a non-limiting example, FIG. 6B illustrates the ViT 318 processing the output of the object detection model. Here, the ViT 318 does not include the image patching process 602, and instead receives the object queries 503 from the VMUT 500 and provides them to the linear projection process 604.

In one form, the vision meta model 310 is tested using a ground truth loss map that provides the actual loss values that the vision meta model 310 is to predict. For example, a meta model training process 650 generates a ground truth map 652 using at least a portion of a labeled dataset ($D_{TRAIN}$ ($X_{TRAIN}$, $Y_{TRAIN}$) having trained map inputs ($X_{TRAIN}$) associated with trained labels ($Y_{TRAIN}$) that are provided to the VMUT 202 to output labels 645. Since small and challenging regions can disproportionately impact test errors in a vision model, a focal loss technique can be used to mitigate the disproportionality. The ground truth is used to adjust the losses of the ViT 318.

In a non-limiting example, in FIG. 6A, the ground truth 652 for the segmentation model is determined using labels 654 and output of the VMUT 400 (e.g., the entropy image 404). During training, the vision metal model 310 receives the output of the VMUT 400 of the metal model training 650.

In another example, FIG. 6B illustrates a meta model training 670 in which the VMUT 500 provides object queries 503, which provides the object identifier image 504. A ground truth 672 is determined using, at least, the object queries 503 of the VMUT 500 and predefined labeled image 674.

In an illustrative example, during training of the vision metal model 310, a group of labeled dataset from $D_{TRAIN}$ (e.g., $\{x_b, y_b\}$ where b=1,...B), are processed through the VMUT 202 to obtain the model output. The overall loss of the vision meta model 310 is provided by equation 1 below in which: "$v_\theta$" is the vision metal model being trained; "r" is the region feature, "f" is the function of the VMUT, "$\mathcal{L}_{ViT}$" is the loss function of the vision metal model; "$\mathcal{L}_f$" is loss of the VMUT. The region feature (r) for a segmentation model is provided as r=[x, f(x), entropy(f(x))] and for an object detection model, the region features is provided as r = query features from f(x).

$$Equation\ 1.....\mathcal{L}_{ViT}\big(v_\theta(r(x_b, f)),\ \mathcal{L}_f\big(f(x_b), y_b\big)\big)$$

Losses are estimated for all instances in the trained dataset ($D_{TRAIN}$). For image loss level, the N = S, where "S" is the number of images in the trained dataset and instance is one image. For regional loss level, "N" is number of considered regions in all images and each instance is one region in the image. During training, for n = 1 to S, "Append $v_\Theta$ (r(xs,f)) into "q", where "q" is distribution. With "M" being the annotation budget, instances ($i_m$; where m = 1 to M) with probabilities defined by the distribution q are selected (e.g., $i_m \in [1,N]$) and the instances are added to the trained dataset to obtained an observed trained dataset ($D_{TEST}^{observed}$). All instances of observed trained dataset are then labeled.

In a non-limiting example, during training of the vision meta model 310, the transformer encoder 606A and the MLP 606B are trained at the same time to accurately provide the image loss level and the regional loss level, respectively. The transformer encoder may generate one class ($\hat{c}_0$) for the entire image and E number of classes $\{\hat{c}_e\}_{e=1}^E$ for all regions. These classes can then be converted back to numerical values during the inference. The loss function for the TE-MLP 606 may be represented by equation 2 below in which: "FL" is a focal loss function; E is "$c_0$" and "$\hat{p}_0$" are the ground

truth and predicted class distribution for the entire image; "$c_e$" and "$\hat{p}_e$" are the ground truth and predicted class distribution for each region.

$$Equation\ 2.....\mathcal{L}_{ViT} = \mathcal{L}_{\text{image}} + \mathcal{L}_{\text{region}} = FL(c_0, \hat{p}_0) + \frac{1}{E}\sum_{p-1}^{E} FL(c_e, \hat{p}_e)$$

For each testing image 302, the vision meta model 310 outputs the estimated loss map 316, which includes the image loss level 614A and the regional loss level 614B for each patch. In a non-limiting example, an example estimated loss map 416 is provided for the segmentation model in FIG. 4, and an example estimated loss map 516 is provided for the object detection model in FIG. 5. In the estimated loss map 516, the different dashed lines represent different detected objects having loss.

The high-loss image filter (HLIF) 312 is configured to filter out estimated loss maps 316 having low-loss, which may be a majority of the testing images 302. Small regions, such as borders and areas of ambiguity, carry most of the test error, and the HLIF 312 is configured to identify the region of high loss or, stated differently, high ambiguity (e.g., informative regions) for further processing. In a non-limiting example, the HLIF 312 is configured to remove or discard the testing image 302 associated with the estimated loss map 316 having a loss level being less than or equal to a loss threshold. The remaining images 302 and associated estimated loss maps 316 are provided as selected high-loss maps 319 for the label annotation process 313.

During the label annotation process 313, portions of the testing image 302 that correspond to the regional loss level 614B having a high-loss (e.g., a loss greater than or equal to the loss threshold) are labeled (e.g., labeled by an individual). In a non-limiting example, referring to FIG. 4, for the segmentation model, a labeled image 410 has identified regions 412 that are to be labeled. As illustrated these regions correspond to borders at the regional loss level 614B. Similarly, referring to FIG. 5, with the object detection model, a labeled image 510 is provided with identified regions 512 that are labeled by the individual.

The subsample performance estimator 314 is configured to counter potential biases from the vision meta model 310, and is configured to output a (test) performance qualifier (PQ) 322 of the VMUT 202 using a weighted analysis based on the image loss level and the regional loss level for each patch. In one form, the performance qualifier 322, which may also be referenced to as a risk or predicted loss, is a value of a loss function on new, unseen data to indicate or measure how well the VMUT 202 is expected to perform in practice when making predictions on data that was not used during a training process. In an example, if the performance qualifier 322 indicates performance above a predefined performance threshold, then the VMUT 202 may be applied for use. In an example, this may include storing the VMUT 202 to a memory of the vision system of the vehicle 104, e.g., for use in analyzing pixel data in images 110 captured by the sensors 108 of the vehicle 104. For instance, the vision system may as a control system to determine or ascertain an actuation signal based on a decision made.

In a non-limiting example, the subsample performance estimator 314 employs data indicative of the labeled image 320, which includes the image loss level and the regional loss level for each patch, to determine the PQ 322. To mitigate bias that may be introduced by selecting images having high-loss maps 319 that were labeled in the labeled image 320, the subsample performance estimator 314 is configured to employ levelled unbiased risk estimator (LURE)-technique to determine the performance qualifier 322 by mitigating selection bias through corrective weighting. Furthermore, the capability of the LURE-technique may extend to variance reduction, given its foundation on importance sampling, a technique defined to diminish variance.

In a non-limiting example, using the LURE technique, the subsample performance estimator 314 is represented by equation 3 below, in which $\hat{R}_{MetaAT}$ is PQ 322 and $q_{im}$ is the predicted loss of given images or regions.

$$Equation\ 3.....\hat{R}_{MetaAT} = \frac{1}{M}\sum_{m=1}^{M} v_m \mathcal{L}_f(f(x_m), y_m), (x_m, y_m) \in D_{test}^{observed},$$

$$v_m = 1 + \frac{N-M}{N-m}\left(\frac{1}{N-m+1} q_{i_m} - 1\right), i_m \in [1, N]$$

Given an unlabeled test dataset, the VMA module 204 having the vision metal model 310 can accurately predict the losses for all instances (e.g., image or regions). The vision metal model leverages the output of the VMUT 202 to provide the identification of highly informative (high-loss) instances to reduce the variance from, for example, a random sampling method. However, directly selecting highly informative instances for labeling and computing the risk $\hat{R}$ could introduce high bias, as these instances may be treated as "hard cases", potentially leading to an overestimation of the risk $\hat{R}$ (e.g., PQ 322) for the entire test dataset. To mitigate possible bias introduced by selecting high informative instances, the VMA module 204 employs the subsample performance estimator 320 to compute the risk $\hat{R}$ (e.g., PQ 322) using weighted average based on the loss distribution predicted by the vision meta model 310.

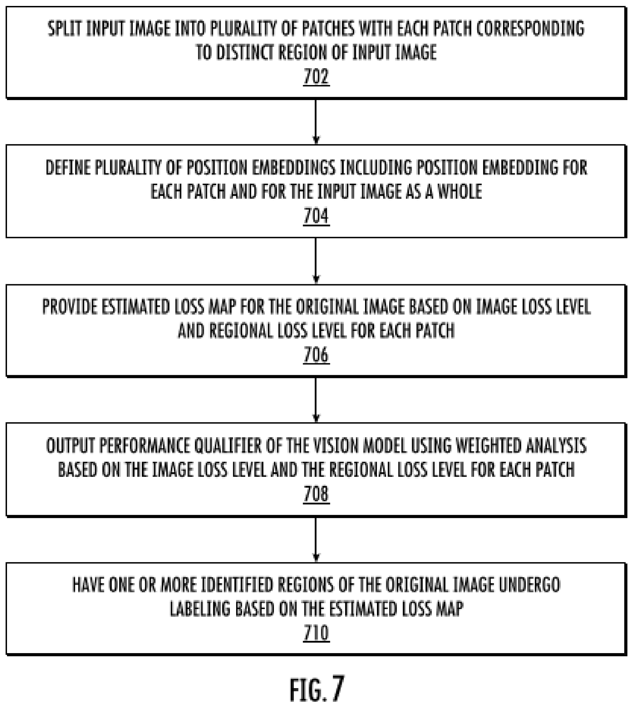

Referring to FIG. 7, an example active vision model evaluation routine 700 performed by the AVME system 200 of the present disclosure is for actively testing a vision model (e.g., VMUT 202) to be employed as part of a vision system to identify visual content of an original image.

At operation 702, the AVME system 200 is configured to split the input image into a plurality of patches with each patch corresponding to a distinct region of the input image. The input image is defined using the model output 304 of the VMUT 202. In one form, the AVME system 200 employs the vision meta model 310 having the ViT 318 to split the input image.

At operation 704, the AVME system 200 defines a plurality of position embeddings including a position embedding for each of the plurality of patches and for the input image as a whole using, for example, the ViT 318.

At operation 706, the AVME system 200 provides an estimated loss map for the original image based on an image loss level and a regional loss level for each patch. In a non-limiting example, the image loss level and the regional loss level for each patch are estimated using the plurality of position embeddings and the TE-MLP 606 of the ViT 318.

At operation 708, the AVME system 200 outputs a performance qualifier 322 of the VMUT 202 using a weighted analysis based on the image loss level and the regional loss level for each patch. In an example, if the performance qualifier 322 indicates performance above a predefined threshold, then the VMUT 202 may be applied for use. In an example, this may include storing the VMUT 202 to a memory of the vision system of the vehicle 104, e.g., for use in analyzing pixel data in images 110 captured by the sensors 108 of the vehicle 104. For instance, the vision system may as a control system to determine or ascertain an actuation signal based on a decision made.

At operation 710, the AVME system 200 has one or more identified regions of the original image undergo labeling based on the estimate loss map. In a non-limiting example, portions of the original map associated with a high-loss regional loss level are labeled, while portion having a low-loss are not labeled.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

In a non-limiting example, the AVME system 200 may include: a hardware computing device, an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The term memory or memory circuit may be a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read only circuit), volatile memory circuits (such as a static random access memory circuit or a dynamic random access memory circuit), magnetic storage media (e.g., an analog or digital magnetic tape or a hard disk drive), and optical storage media (e.g., a USB, CD, a DVD, or a Blu-ray Disc).

The AVME system 200 described in this application may be partially or fully implemented by a special purpose computer created by configuring a general-purpose computer to execute one or more particular functions embodied in computer programs. Components employed for the AVME system 200 may be provided in a single device or may be distributed among multiple devices that are in communication using wireless communication (e.g., cellular network, WiFi network, BLUETOOTH, among others) and/or wired communication.

As used herein, the phrase at least one of A, B, and C should be construed to mean a logical (A OR B OR C), using a non-exclusive logical OR, and should not be construed to mean "at least one of A, at least one of B, and at least one of C."

The description of the disclosure is merely exemplary in nature and, thus, variations that do not depart from the substance of the disclosure are intended to be within the scope of the disclosure. Such variations are not to be regarded as a departure from the spirit and scope of the disclosure.

## Claims

1. A method for active testing a vision model to be employed as part of a vision system to identify visual content of an original image, comprising:

splitting an input image into a plurality of patches with each patch corresponding to a distinct region of the input image using a vision transformer, the input image being defined using a model output of the vision model; defining a plurality of position embeddings including a position embedding for each of the plurality of patches and for the input image as a whole using the vision transformer; providing an estimated loss map for the original image based on an image loss level and a regional loss level for each patch, the image loss level and the regional loss level for each patch are estimated using the plurality of position embeddings and a transformer encoder-multilayer perceptron of the vision transformer; labeling one or more identified regions of the original image based on the estimated loss map to define a labeled image; outputting a test performance qualifier indicating expected performance of the vision model when the vision model is part of the vision system, the test performance qualifier being calculated using a weighted analysis based on the image loss level and the regional loss level for each patch provided with the labeled image; and employing the vision model in the vision system to detect and/or identify visual content in pixel data captured by sensors of the vehicle.

2. The method of claim 1, wherein the position embedding for the input image is provided as a class embedding at position zero and the position embeddings for the plurality of patches are at positions one to E, wherein E is equal to number of patches.

3. The method of claim 1, wherein the model output includes an entropy image and a segmented image.

4. The method of claim 3, further comprising forming the input image as concatenation of the original image, the entropy image, and the segmented image.

5. The method of claim 1, wherein the model output includes a set of object queries and an object identifier image having one or more bounding boxes to identify objects provided in the set of object queries.

6. The method of claim 1, further comprising labeling at least a portion of the original image in response to the estimated loss map associated with the original image being greater than or equal to a loss threshold.

7. The method of claim 6, wherein the at least a portion of the original image being labeled are associated with one or more patches having the regional loss level being greater than or equal to the loss threshold.

8. The method of claim 6, further comprising discarding the original image from being labeled in response to the estimated loss map associated with the original image being less than or equal to the loss threshold.

9. The method of claim 1, wherein the original image is selected from a plurality of testing images.

10. The method of claim 1, further comprising training a first vision transformer using a ground truth data provided by the vision model using a trained dataset having a plurality of labeled images; and outputting the first vision transformer as a trained vision transformer model for testing the vision model with the original image that is unlabeled.

11. A system for active testing a vision model to be employed as part of a vision system to identify visual content of an original image comprising:
one or more hardware computing devices configured to:

split an input image into a plurality of patches with each patch corresponding to a distinct region of the input image using a vision transformer, the input image being defined using the model output; define a plurality of position embeddings including a position embedding for each of the plurality of patches and for the input image as a whole using the vision transformer; provide an estimated loss map for the original image based on an image loss level and a regional loss level for each patch, the image loss level and the regional loss level for each patch are estimated using the plurality of position embeddings and a transformer encoder-multilayer perceptron of the vision transformer; provide one or more identified regions of the original image labeled based on the estimated loss map to define a labeled image; output a test performance qualifier indicating expected performance of the vision model when the vision model is part of the vision system, the test performance qualifier being calculated using a weighted analysis based on the image loss level and the regional loss level for each patch provided with the labeled image; and

employ the vision model in the vision system to detect and/or identify visual content in pixel data captured by sensors of the vehicle.

12. The system of claim 11, wherein the position embedding for the input image is provided as a class embedding at position zero and the position embeddings for the plurality of patches are at positions one to E, wherein E is equal to number of patches.

13. The system of claim 11, wherein the model output includes an entropy image and a segmented image.

14. The system of claim 13, wherein the one or more hardware computing devices are further configured to form the input image as concatenation of the original image, the entropy image, and the segmented image.

15. The system of claim 11, wherein the model output includes a set of object queries and an object identifier image having one or more bounding boxes to identify objects provided in the set of object queries.

16. The system of claim 11, wherein the one or more hardware computing devices are further configured to label at least a portion of the original image in response to the estimated loss map associated with the original image being greater than or equal to a loss threshold.

17. The system of claim 16, wherein the at least a portion of the original image being labeled are associated with one or more patches having the regional loss level being greater than or equal to the loss threshold.

18. The system of claim 16, wherein the one or more hardware computing devices are further configured to discard the original image from being labeled in response to the estimated loss map associated with the original image being less than or equal to the loss threshold.

19. The system of claim 11, wherein the original image is selected from a plurality of testing images.

20. The system of claim 11, wherein the one or more hardware computing devices are further configured to train a first vision transformer using a ground truth data provided by the vision model using a trained dataset having a plurality of labeled images; and outputting the first vision transformer as a trained vision transformer model for testing the vision model with the original image that is unlabeled.

FIG. 1

AVME SYSTEM
200

VMUT
202

VMA MODULE
204

FIG. 2

FIG. 3

EP 4 752 850 A1

FIG. 4

FIG. 5

EP 4 752 850 A1

FIG. 6A

EP 4 752 850 A1

FIG. 6B

SPLIT INPUT IMAGE INTO PLURALITY OF PATCHES WITH EACH PATCH CORRESPONDING
TO DISTINCT REGION OF INPUT IMAGE
702

DEFINE PLURALITY OF POSITION EMBEDDINGS INCLUDING POSITION EMBEDDING FOR
EACH PATCH AND FOR THE INPUT IMAGE AS A WHOLE
704

PROVIDE ESTIMATED LOSS MAP FOR THE ORIGINAL IMAGE BASED ON IMAGE LOSS LEVEL
AND REGIONAL LOSS LEVEL FOR EACH PATCH
706

OUTPUT PERFORMANCE QUALIFIER OF THE VISION MODEL USING WEIGHTED ANALYSIS
BASED ON THE IMAGE LOSS LEVEL AND THE REGIONAL LOSS LEVEL FOR EACH PATCH
708

HAVE ONE OR MORE IDENTIFIED REGIONS OF THE ORIGINAL IMAGE UNDERGO
LABELING BASED ON THE ESTIMATED LOSS MAP
710

FIG. 7

# EUROPEAN SEARCH REPORT

**Application Number**

EP 25 21 8948

## DOCUMENTS CONSIDERED TO BE RELEVANT

| Category | Citation of document with indication, where appropriate, of relevant passages | Relevant to claim |
|---|---|---|
| X | Su Sanbao ET AL: "MetaAT: Active Testing for Label-Efficient Evaluation of Dense Recognition Tasks" In: "ECCV 2024, Lecture Notes in Computer Science", 25 October 2024 (2024-10-25), Springer Nature Switzerland, XP093377119, ISBN: 978-3-031-73228-7 pages 325-342, DOI: 10.1007/978-3-031-73229-4_19, | 1-5, 9-15,19, 20 |
| A | * abstract * * Section 3; figures 2,3 * * Section 4 * | 6-8, 16-18 |

-----

**CLASSIFICATION OF THE APPLICATION (IPC)**

INV.
G06V10/776
G06V20/56

**TECHNICAL FIELDS SEARCHED (IPC)**

G06V
G06F

The present search report has been drawn up for all claims

| Place of search | Date of completion of the search | Examiner |
|---|---|---|
| The Hague | 16 March 2026 | Boltz, Sylvain |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)